# EUROPÄISCHE PATENTSCHRIFT

(11) **EP 1 656 272 B1**
(45) Veröffentlichungstag und Bekanntmachung des Hinweises auf die Patenterteilung: **19.01.2011**
(21) Anmeldenummer: 04762617.1
(22) Anmeldetag: 06.08.2004
(51) Int. Cl.: B60J 7/11, B60J 7/14

(54) **KRAFTFAHRZEUG MIT EINEM BEWEGLICHEN DACHTEIL**
MOTOR VEHICLE COMPRISING A DISPLACEABLE ROOF SECTION
VEHICULE AUTOMOBILE COMPORTANT UNE PARTIE DE TOIT MOBILE

(30) Priorität: 14.08.2003 DE 10337575
(43) Veröffentlichungstag der Anmeldung: 17.05.2006
(73) Patentinhaber: Wilhelm Karmann GmbH, 49084 Osnabrück (DE)
(72) Erfinder: KUHR, Jürgen, 49086 Osnabrück (DE)
(74) Vertreter: Kronthaler, Schmidt & Coll.
(86) Internationale Anmeldenummer: PCT/DE2004/001772
(87) Internationale Veröffentlichungsnummer: WO 2005/016677

(56) Entgegenhaltungen:
- DE-U- 20 201 411
- FR-A- 1 370 077
- GB-A- 464 360
- GB-A- 644 045
- US-A- 5 209 544

## Beschreibung

Die Erfindung betrifft ein Kraftfahrzeug mit wenigstens einem beweglichen Dachteil, das im geschlossenen Zustand fahrzeugfrontseitig an einem Windschutzscheibenrahmen und mit seitlichen Außenbereichen jeweils an einen Unterstützungsträger anschließt, wobei die Unterstützungsträger zur Ausbildung eines offenen Dachbereichs zumindest bereichsweise in seitliche Holme des Windschutzscheibenrahmens verlagerbar sind.

Aus der DE 202 01 411 U1 ist ein derartiges Kraftfahrzeug, welches beispielsweise als Cabriolet- oder Targa-Fahrzeug ausgebildet sein kann, bekannt. Bei diesem Kraftfahrzeug bieten die in seitliche Holme des Windschutzscheibenrahmens verlagerbaren Unterstützungsträger im geschlossenen Zustand des Fahrzeugs ein stabile Auflage für das wenigstens eine bewegliche Dachteil und im offenen Zustand des Fahrzeugverdecks, bei dem das Dachteil manuell entfernt oder über einen Gelenkmechanismus im Heckbereich des Fahrzeugs abgelegt sein kann, eine Verstärkung für die seitlichen Holme des Windschutzscheibenrahmens, wodurch bei einer Belastung des Windschutzrahmens mit dem Fahrzeuggewicht, wie es bei einem Überschlag auftreten kann, ein verstärkter Schutz für die Insassen besteht.

Verbesserungsbedürftig ist bei diesem Kraftfahrzeug jedoch die Führung der Unterstützungsträger bei ihrer Bewegung zwischen einer ersten Endposition im in den seitlichen Holm des Windschutzscheibenrahmens versenktem Zustand und einer zweiten Endposition an einem hinteren Dachteil bei geschlossenem Fahrzeugdach. Zum einen birgt die vorgeschlagene Ausgestaltung der A-Säulen des Windschutzscheibenrahmens mit einem Aufnahmekanal, welcher in seinen Ausmaßen im Wesentlichen exakt der Quererstreckung der Unterstützungsträger entspricht, die Gefahr eines sogenannten "Schubladeneffektes", d. h. eines Verkanntens der beiderseitigen Unterstützungsträger bei ihrer Verlagerung zwischen den beiden Endpositionen, und zum anderen ist die Stabilität der Dachrahmenkonstruktion mit der vorgeschlagenen Anlagerung der seitlichen Unterstützungsträger an dem hinteren Dachteil hier begrenzt.

Es ist daher Aufgabe der vorliegenden Erfindung, bei einem Kraftfahrzeug der eingangs genannten Art einen hinsichtlich Verklemmschutz und Dachstabilität verbesserten Mechanismus zur Verlagerung der seitlichen Unterstützungsträger zwischen ihren Endpositionen zu schaffen.

Diese Aufgabe wird erfindungsgemäß durch ein Kraftfahrzeug nach den Merkmalen des Patentanspruches 1 gelöst, wobei die Unterstützungsträger in einem durch den zugeordneten seitlichen Holm des Windschutzscheibenrahmens gebildeten Aufnahmekanal im Bereich ihres fahrzeugfrontseitigen Endes und im Bereich des Austritts aus dem oberen Ende des seitlichen Holms jeweils mittels einer Rollenlagerung spielfrei und mit definiertem Abstand zur Wandung des Aufnahmekanals geführt sind.

Mit der erfindungsgemäßen Rollenlagerung der Unterstützungsträger in den seitlichen Holmen des Windschutzscheibenrahmens wird vorteilhafterweise dem sogenannten Schubladeneffekt entgegengewirkt und eine problemlose synchrone Verlagerung der beiderseits des Windschutzscheibenrahmens angeordneten Unterstützungsträger zwischen deren Endpositionen gewährleistet.

Bei einer besonders vorteilhaften Ausführung der Erfindung mit einer Ausgestaltung eines Kraftfahrzeuges gemäß den Merkmalen des Patentanspruches 8 ist zudem der Unterstützungsträger an seinem fahrzeugheckseitigen Ende zur zentrierten Aufnahme an einer Verriegelungseinrichtung an einem hinteren Dachteil vorgesehen, wobei die Verriegelungseinrichtung mit einem eine zentrierende Aufnahme aufweisenden, zylindrischen Verschlusselement ausgebildet ist, in dem ein wippenartig gelagerter Verriegelungshebel angeordnet ist, welcher zum Eingreifen in eine Aussparung an dem fahrzeugheckseitigen Ende des Unterstützungsträgers in Verriegelungsposition ausgelegt ist.

Eine derartige Ausgestaltung des Kontaktbereichs des seitlichen Unterstützungsträgers mit dem im geschlossenen Zustand des Fahrzeugdachs angrenzenden Dachteil ermöglich auf konstruktiv einfach Weise eine sichere Arretierung des seitlichen Unterstützungsträgers an dem hinteren Dachteil, wodurch die Stabilität des Daches im geschlossenen Verdeckzustand erhöht wird.

Gleiches wird durch eine vorteilhafte Ausführung gemäß Patentanspruch 13 erreicht, wenn in dem zylindrischen Verschlusselement der Verriegelungseinrichtung ein mit einem Rastelement verbundener Längsschieber angeordnet ist, bei dessen Verschiebung das Rastelement in eine Rastaussparung an dem fahrzeugheckseitigen Ende des Unterstützungsträgers eingreift oder diese freigibt.

Eine besonders sichere Führung der Unterstützungsträger zwischen ihren Endpositionen wird somit dann erreicht, wenn eine Rollenlagerung der Unterstützungsträger in den seitlichen Holmen des Windschutzscheibenrahmens gemäß den Merkmalen des Patentanspruches 1 mit einer zentrierten Führung und Verriegelung der Unterstützungsträger an dem hinteren Dachelement gemäß den Merkmalen des Patentanspruches 8 oder 13 kombiniert wird.

Weitere Vorteile und vorteilhafte Ausgestaltungen des Gegenstandes nach der Erfindung sind der Beschreibung, der Zeichnung und den Patentansprüchen entnehmbar.

Zwei Ausführungsbeispiele eines erfindungsgemäß ausgestalten Kraftfahrzeugs sind in der Zeichnung schematisch vereinfacht dargestellt und werden nachfolgend näher erläutert.

Es zeigt:
- Fig. 1: ein erfindungsgemäßes, in Targa-Bauweise ausgebildetes Kraftfahrzeug mit geschlos- senem Dach in einer schematisierten Sei- tenansicht;
- Fig. 2: das Kraftfahrzeug gemäß Fig. 1 mit geöff- netem Dach;
- Fig. 3: eine schematisierte Seitenansicht eines weiteren erfindungsgemäßen Kraftfahrzeugs in Cabriolet-Bauweise mit einem vollstän- dig in einem Aufnahmeraum im Heckbereich des Fahrzeugs ablegbarem Verdeck, welches in Fig. 3 in zwei unterschiedlichen Posi- tionen während eines Öffnungs- oder Schließvorgangs gezeigt ist;
- Fig. 4: eine teilweise aufgebrochene Draufsicht auf das Kraftfahrzeug nach Fig. 3;
- Fig. 5: eine dreidimensionale Detailansicht eines hülsenartigen Gehäuseteils eines seitli- chen Holms eines Windschutzscheibenrahmens mit einer Rollenlagerung zur Führung eines zugeordneten Unterstützungsträgers;
- Fig. 6: eine Draufsicht auf das fahrzeugfrontsei- tig Ende eines Unterstützungsträgers mit einer Rollenlagerung;
- Fig. 7: eine dreidimensionale Seitenansicht der Rollenlagerung der Fig. 6 in Alleinstel- lung;
- Fig. 8: einen schematisierten Längsschnitt durch das heckseitige Ende eines Unterstützungs- trägers und eine erste Ausführung eines Verschlusselements einer Verriegelungsein- richtung an einem hinteren Dachteil; und
- Fig. 9: einen schematisierten Längsschnitt durch das heckseitige Ende des Unterstützungs- trägers gemäß Fig. 8 und eine zweite Aus- führung des Verschlusselementes der Ver- riegelungseinrichtung an dem hinteren Dachteil.

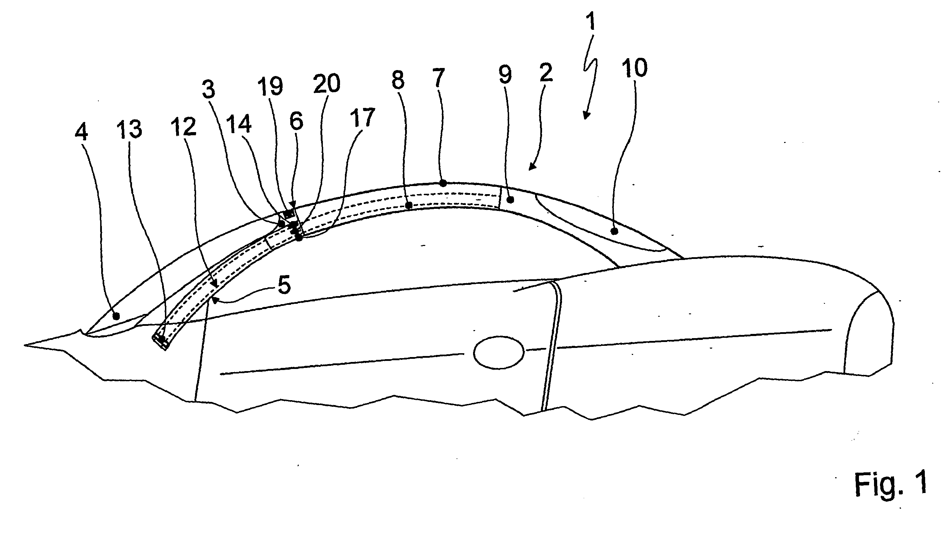

In den Fig. 1 bis Fig. 3 ist ausschnittsweise ein Kraftfahrzeug 1 dargestellt, welches ein Dach 2 aufweist. Das Dach 2 schließt in geschlossenem Zustand fahrzeugfrontseitig an einen Windschutzscheibenrahmen 3 an, welcher eine Windschutzscheibe 4 umgreift und A-Säulen des Kraftfahrzeuges 1 bildende seitliche Holme 5 und ein oberes Querrahmenteil 6 umfasst.

Das Dach 2 weist vorliegend ein bewegliches Dachteil 7 auf, welches in geschlossenem Zustand des Daches 2 an seitlichen Unterstützungsträgern 8, welche das Dach 2 stabilisieren, anliegt. Heckseitig schließt das bewegliche Dachteil 7 an ein hinteres Dachteil 9 an.

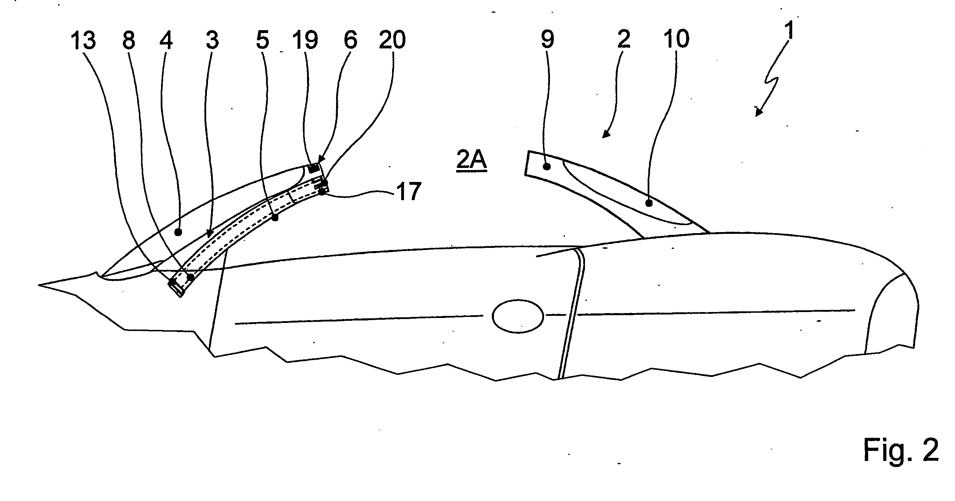

Bei der Ausführung gemäß Fig. 1 und Fig. 2, bei der das Kraftfahrzeug 1 in Targa-Bauweise ausgebildet ist, ist das hintere Dachteil 9 starr angeordnet und mit einer Heckscheibe 10 ausgebildet. Das bewegliche Dachteil 7, welches z. B. aus Metall oder Kunststoff oder Plexiglas bestehen kann, kann hier zur Ausbildung eines offenen Dachbereichs 2 manuell vollständig entfernt werden. Nach Entfernen des mittleren beweglichen Dachteils 7 und Freigabe einer Dachöffnung 2A können die nunmehr nicht mehr benötigten seitlichen Unterstützungsträger 8 durch Öffnen einer Verriegelungseinrichtung 11 in ihrem Kontaktbereich mit dem hinteren Dachteil 9 in die seitlichen Holme 5 des Windschutzscheibenrahmens 3 versenkt werden.

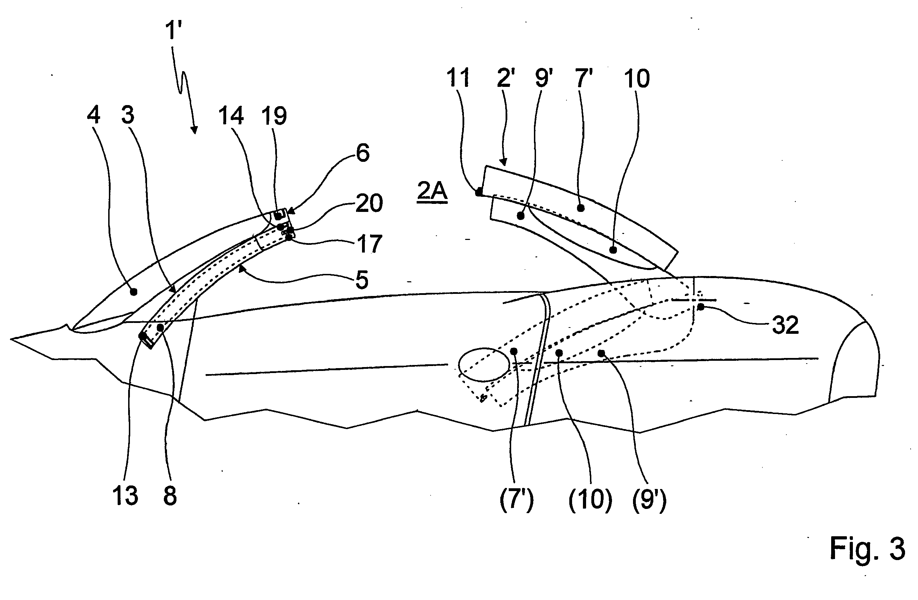

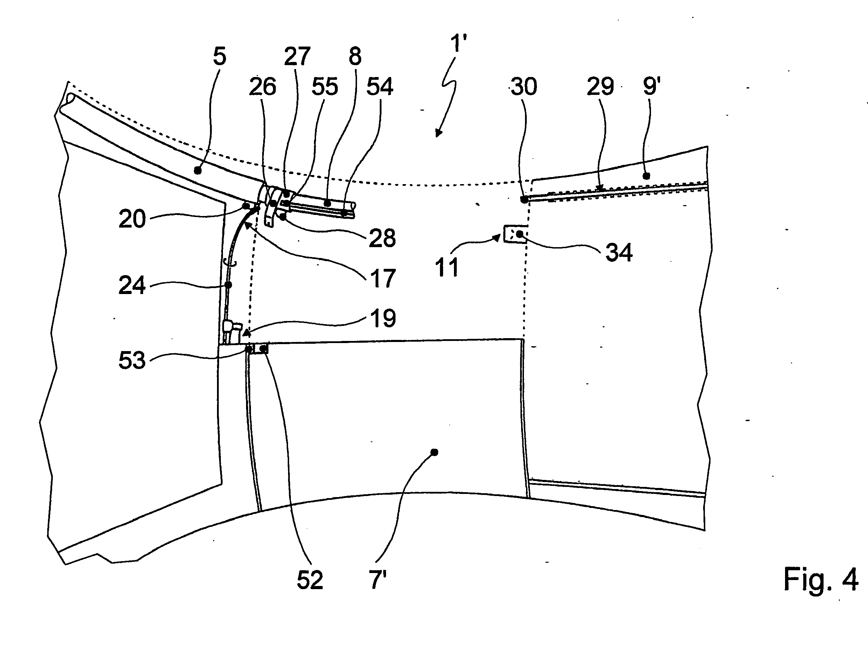

In Fig. 3 und Fig. 4 ist eine weitere Ausbildung eines Kraftfahrzeugs 1' gezeigt, das als Cabriolet-Fahrzeug ausgebildet ist. Das bewegliche Dachteil 7' schiebt sich hier bei einer Öffnungsbewegung des Daches 2' über das hintere Dachteil 9', wonach beide Dachteile 7', 9' um eine gemeinsame Schwenkachse 32, die im Heckbereich des Kraftfahrzeugs 1' liegt, nach unten in einen Stauraum verlagert werden. Hierzu kann ein beliebiger bekannter Hebelmechanismus eingesetzt werden.

Es versteht sich, dass bei Alternativausführungen zu den beiden gezeigten Ausgestaltungen des Kraftfahrzeugs 1 bzw. 1' auch mehrere bewegliche Dachteile vorgesehen sein können und dass das hintere Dachteil mehrere Abschnitte umfassen kann.

Bei den gezeigten Ausführungen bilden die seitlichen Holme 5 zur Aufnahme des Unterstützungsträgers 8 bei geöffnetem Dach 2 bzw. 2' jeweils einen Aufnahmekanal 12 aus, in dem der betreffende Unterstützungsträger 8 im Bereich seines fahrzeugfrontseitigen Endes mit einer ersten Rollenlagerung 13 und im Bereich seines Austritts aus dem oberen Ende des seitlichen Holms 5 mit einer zweiten Rollenlagerung 14 spielfrei und mit definiertem Abstand zur Wandung des Aufnahmekanals 12 geführt ist.

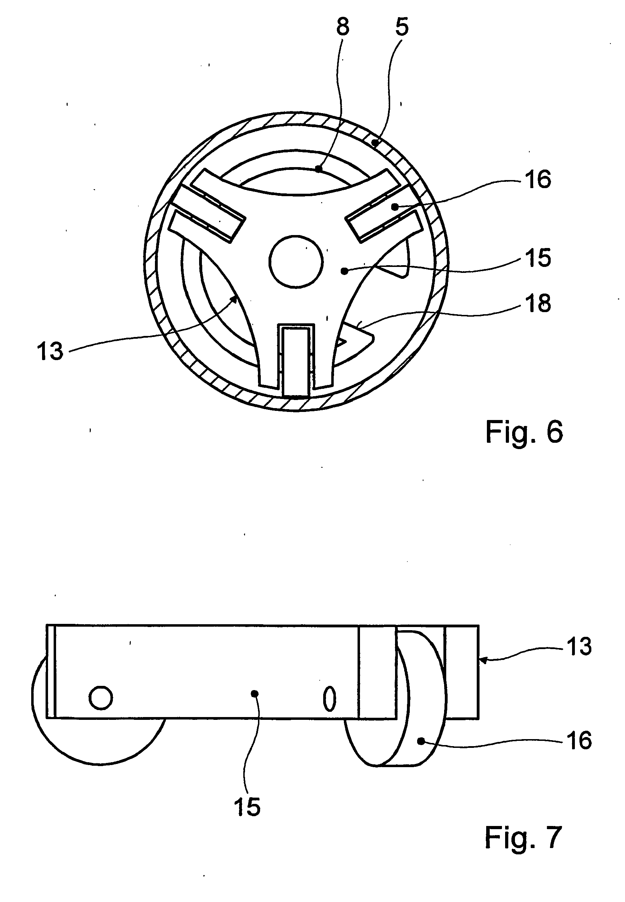

Insbesondere in,Fig. 6 und Fig. 7 ist näher ersichtlich, dass der Unterstützungsträger 8 bei der gezeigten Ausführung an seinem fahrzeugfrontseitigem Ende zur Ausbildung der ersten, fahrzeugfrontseitigen Rollenlagerung 13 eine wenigstens annähernd sternförmige Halteeinrichtung 15 aufweist, an deren Zacken drei koplanar gelagerte Rollen 16 gehaltert sind.

Die Anzahl der an der Innenwandung des Aufnahmekanals 12 laufenden Rollen 16, welche hier aus gummiartigem Material gebildete Räder darstellen, kann bei Ausführungen, welche von der bevorzugten gezeigten Dreipunktlagerung abweichen, beliebig variieren.

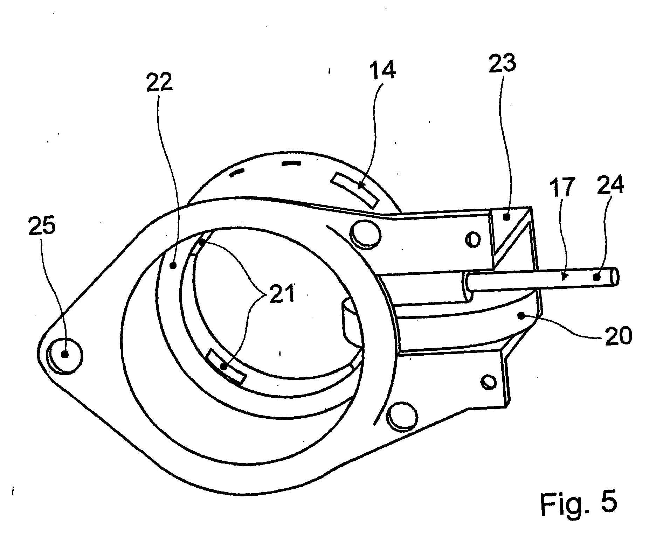

Wie insbesondere Fig. 5 zu entnehmen ist, ist die dem Austrittsbereich des Unterstützungsträgers 8 aus dem seitlichen Holm 5 zugeordnete zweite Rollenlagerung 14 im Bereich einer Antriebseinrichtung 17 für den Unterstützungsträger 8 angeordnet. Die Antriebseinrichtung 17 umfasst dabei eine in Längsrichtung des Unterstützungsträgers 8 an diesem ausgebildete Zahnleiste 18 und ein damit in Eingriff stehendes, von einem Antriebsmotor 19 antreibbares Ritzel 20.

Die zweite Rollenlagerung 14 ist vorliegend durch vier als Walzen ausgeführte Rollen 21 gebildet, welche den Unterstützungsträger im Bereich seines Austritts aus dem seitlichen Holm 5 zusätzlich zu dem Ritzel 20 der Antriebseinrichtung 17 führen. Die Rollen 21 sind dabei kreisförmig in einem hülsenartigen Gehäuseteil 23 im Bereich eines einen Anschlag bildenden Absatzes 22, welcher für den Unterstützungsträger 8 dessen fahrzeugheckseitige Endposition bestimmt, angeordnet.

Das hülsenartige Gehäuseteil 23 ist zweckmäßigerweise als ein in Fig. 5 gezeigtes separates, an dem seitlichen Holm 5 des Windschutzscheibenrahmens 3 über vorliegend drei Schraubverbindungen 25 befestigbares Bauteil ausgeführt.

Der elektrische Antriebsmotor 19 dient bei den gezeigten Ausführungen als zentraler Antriebsmotor für beide Unterstützungsträger 8, weshalb er im Wesentlichen fahrzeugmittig an dem Windschutzscheibenrahmen 3 angeordnet ist und über entsprechend gebogene Wellen 24 in Fahrzeugquerrichtung mit dem jeweils mit dem Unterstützungsträger 8 zusammenwirkenden Ritzel 20 verbunden ist.

Durch den Einsatz eines zentralen Antriebsmotors wird neben der Rollenlagerung der Unterstützungsträger 8 in den seitlichen Holmen 5 des Windschutzscheibenrahmens 3 weiterhin einem Schubladeneffekt beim Bewegen der Unterstützungsträger 8 in den seitlichen Holmen 5 entgegengewirkt, da aufgrund der synchronisierten Bewegung der beiden Unterstützungsträger 8 ein Verkanten oder Verklemmen in Folge eines unterschiedlichen Antriebs der Unterstützungsträger vermieden wird.

Bei einer entsprechenden Zwangssynchronisation kann diese Wirkung gegebenenfalls auch bei Einsatz von zwei Antriebsmotoren,erreicht werden, wenngleich eine solche Lösung mit höherem Aufwand verbunden ist.

Anstelle eines Antriebs der Unterstützungsträger 8 durch einen elektrischen Antriebsmotor kann in einer Alternativausführung auch ein hydraulischer oder pneumatischer Antrieb Anwendung finden. Auch ist es möglich, die Verlagerung der Unterstützungsträger 8 manuell ohne Antriebsmotor vorzusehen.

Bei der Ausgestaltung des Kraftfahrzeuges 1' als Cabriolet gemäß Fig. 3 und Fig. 4 ist der vordere Endbereich des beweglichen Dachteils 7' über eine elastisch verformbare Verbindung 26, hier ein Federstahlblech, mit einer den Unterstützungsträger 8 teilweise oder vollständig umgreifenden Hülse 27 verbunden.

Alternativ kann bei einer weiteren Ausführung auch vorgesehen sein, dass das bewegliche Dachteil mit der Hülse mittels eines für jede Fahrzeugseite vorgesehenen Dreiecklenkers mit einer Kugelkopf-Lagerung an dem beweglichen Dachteil verbunden ist.

Die Hülse 27 weist im gezeigten Ausführungsbeispiel eine Ausnehmung auf, durch die hindurch ein Ritzel 28 in die nutenartige Zahnleiste 18 des Unterstützungsträgers 8 eingreifen kann.

Die Hülse 27 ist nahezu spielfrei auf dem Unterstützungsträger 8 gehalten und auf diesem längsbeweglich, wodurch mittels manuellem Antrieb oder durch Antrieb des Ritzels 28 die Längsverschiebung des an der Hülse 27 hängenden mittleren Dachteils 7' bewirkt werden kann. Um beim Verlagern des mittleren Dachteils 7' bei einer Öffnungsbewegung des Dachs 2' eine Kollision mit dem dahinter liegenden Dachteil 9' zu vermeiden, ist ein in einem seitlichen Rahmenteil 29 schwenkbar angeordneter Aufsteller 30 vorgesehen, welcher senkrecht zur Längsachse des seitlichen Rahmenteils aufschwenkbar ist, um somit bei einer Rückwärtsverlagerung des Dachteils 7' auf dessen rückwärtigen Teil im Sinne eines Anhebens einzuwirken und damit das Überlaufen des hinteren Dachteils 9' zu ermöglichen. Die Aufsteller 30 und die Ritzel 28 sind jeweils separat miteinander synchronisiert.

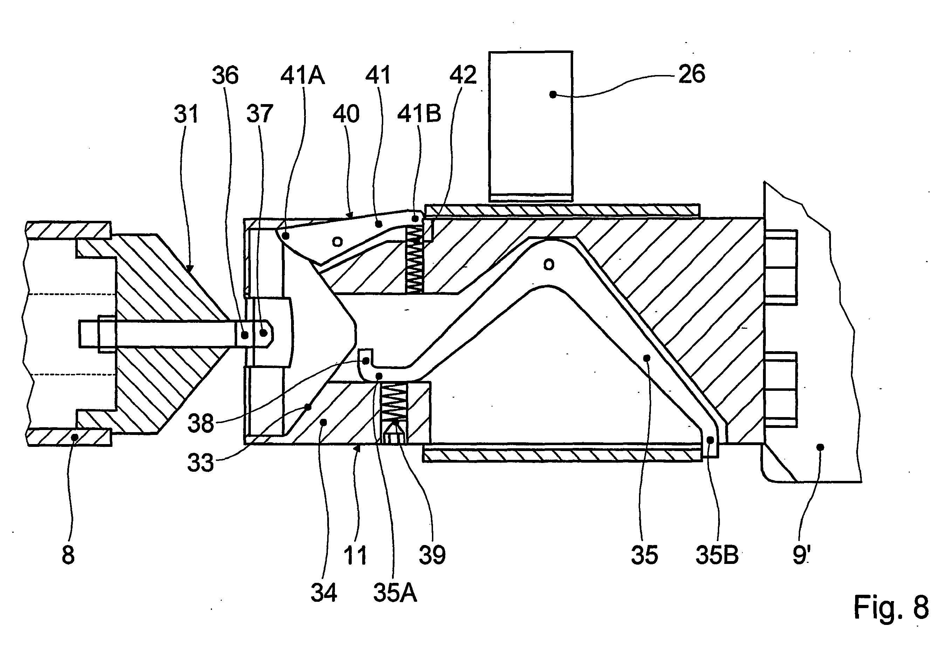

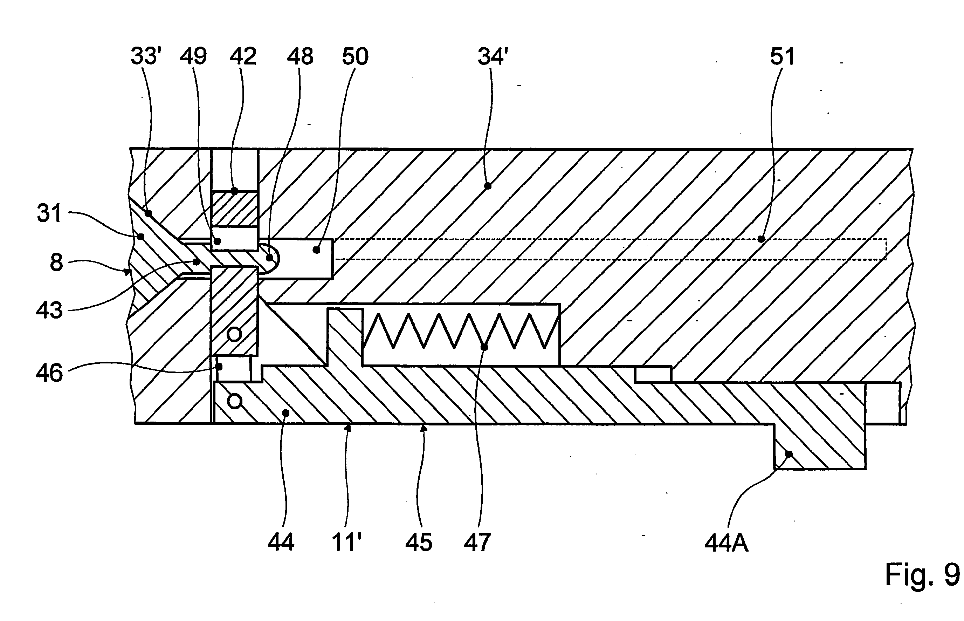

An seinem fahrzeugheckseitigen Ende weist der Unterstützungsträger 8 einen konusförmigen Bereich 31 auf, welcher zur Aufnahme an einer ersten Ausführung der Verriegelungseinrichtung 11 gemäß Fig. 8 oder einer zweiten Verriegelungseinrichtung 11' gemäß Fig. 9 an dem hinteren Dachteil 9' vorgesehen ist. Der konusförmige Bereich 31 ist vorliegend auf einfachste Weise als separates Bauteil ausgeführt und auf den fahrzeugheckseitigen Endbereich des Unterstützungsträgers 8 aufgesteckt und daran vernietet. Selbstverständlich kann der Fachmann hier auch eine andere geeignete Ausgestaltung wählen, wobei anstelle einer Konusform auch eine Teilkugelform vorgesehen sein kann.

Die Verriegelungseinrichtung 11 bzw. 11' ist mit einem zylindrischen Verschlusselement 34 bzw. 34' ausgebildet, welches im Wesentlichen ein zylindrisches Drehteil darstellt, über das die Hülse 27 führbar ist, und welches eine zentrierende Aufnahme - hier einen Aufnahmekegel 33 bzw. 33' - für das heckseitige Ende 31 des Unterstützungsträgers 8 aufweist.

In dem in Fig. 8 gezeigten Verschlusselement 34 ist ein wippenartig gelagerter Verriegelungshebel 35 angeordnet, welcher zum Eingreifen in eine Aussparung 36 an dem konischen Ende 31 des Unterstützungsträgers in einer Verriegelungsposition der Verriegelungseinrichtung 11 ausgelegt ist. Zum Eingreifen in die Aussparung 36, welche vorliegend als eine Querbohrung an einem eingeschraubten Endfortsatz 37 des Unterstützungsträgers 8 ausgebildet ist, weist der Verriegelungshebel 35 an seinem dem Unterstützungsträger 8 zugewandten Ende einen Haken 38 auf.

Der Verriegelungshebel 35 ist in dem Verschlusselement 34 derart gelagert, dass er bei Einführung des konusförmigen Endes 31 des Unterstützungsträgers 8 in den Aufnahmekegel 33 des Verschlusselements 34 aus einer Ruheposition in die Verriegelungsposition überführt wird, wofür der Verriegelungshebel 35 an seinem dem Unterstützungsträger 8 zugewandten Ende 35A mit einer Feder 39 zusammenwirkt und an seinem dem Unterstützungsträger 8 abgewandten Ende 35B mit der auf dem Verschlusselement 34 geführten, mit dem hinteren Dachteil 9' verbundenen Hülse 27 zusammenwirkt.

Im nicht verriegelnden Zustand der Verriegelungseinrichtung 11 ist die Hülse 27 an deren dem Unterstützungsträger 8 zugewandten Ende durch eine Arretierungseinrichtung 40 axial gehalten. Die Arretierungseinrichtung 40 ist mit einem Hebelelement 41 ausgebildet, welches im nicht verriegelnden Zustand der Verriegelungseinrichtung 11 mit einem ersten Hebelende 41A in den Aufnahmekegel 33 des Verschlusselements 34 ragt und mit einem zweiten Hebelende 41B durch die Kraft eines Federelements 42 in eine über den Außenumfang des zylindrischen Verschlusselements 34 ragende, die Hülse 27 axial haltende Position verschoben ist.

Bei Einführung des konusförmigen Endes 31 des Unterstützungsträgers 8 in den Aufnahmekegel 33 des Verschlusselements 34 übt das konusförmige Ende 31 des Unterstützungsträgers 8 auf das erste Hebelende 41A des Hebelelements 41 eine Kraft aus, durch die es in seinem Lagerpunkt entgegen der Kraft des Federelements 42 derart verschwenkt wird, dass das zweite Hebelende 41B innerhalb des Außenumfangs des Verschlusselements 34 liegt, so dass die Hülse 27 darüber in Richtung des Unterstützungsträgers gleiten kann und den Verriegelungshebel 35 freigibt. Indem die bezüglich ihrer Längsbewegung freigegebene Hülse 27 sich nach vorne bzw. in Richtung des Unterstützungsträgers 8 bewegt, wird nämlich das den Unterstützungsträger 8 abgewandte Ende 35B des Verriegelungshebels 35 von der Hülse 27 freigegeben, womit dieser durch die Kraft der Feder 39 derart verschwenkt wird, dass das dem Unterstützungsträger 8 zugewandte Ende 35A mit dem Haken 38 in die Aussparung 36 an dem,konusförmigen Ende 31 des Unterstützungsträgers 8 gedrückt wird.

In diesem verrasteten Zustand besteht über den Unterstützungsträger 8 eine stabile Verbindung zwischen dem eine A-Säule bildenden seitlichen Holm 5 des Windschutzscheibenrahmens 3 und dem hinteren Dachteil 9'.

Zum Entriegeln der Verriegelungseinrichtung 11 wird die Hülse 27 analog in Fahrzeugheckrichtung verschoben, wobei die Hülse 27 das Hebelelement 41 der Arretierungseinrichtung 40 überfährt und gegen das dem Unterstützungsträger 8 abgewandte Ende 35B des Verriegelungshebels 35 drückt, so dass der Verriegelungshebel 35 entgegen der Kraft der Feder 39 mit seinem dem Unterstützungsträger 8 zugewandten Ende 35A aus dem Eingriff mit der Aussparung 36 an dem konusförmigen Ende 31 des Unterstützungsträgers 8 verschwenkt wird und den Unterstützungsträger 8 somit freigibt.

Nach Freigabe der beiderseits des Kraftfahrzeugs 1' angeordneten Unterstützungsträger 8 kann das Dach 2' zur Ausbildung der Dachöffnung 2A abgelegt werden, und die Unterstützungsträger 8 können in den seitlichen Holmen 5 des Windschutzscheibenrahmens 3 versenkt werden. Die Verriegelung des Unterstützungsträgers 8 im in den seitlichen Holm 5 eingefahrenen Zustand erfolgt vorliegend über eine Selbsthemmung der Antriebseinrichtung 17, jedoch kann dabei auch jede andere geeignete Verriegelungseinrichtung vorgesehen werden, welche den Unterstützungsträger 8 in seiner zweiten Endposition sichert.

Bei der Ausführung der Verriegelungseinrichtung 11' gemäß Fig. 9 weist der Unterstützungsträger 8 an seinem fahrzeugheckseitigen Ende ebenfalls einen konus- oder gegebenenfalls teilkugelförmigen Bereich 31 auf, welcher zur Aufnahme in einem Aufnahmekegel 33' der an dem hinteren Dachteil 9' befestigten Verriegelungseinrichtung 11' vorgesehen ist. Der Aufnahmekegel 33' ist auch hier an einem zylindrischen Verschlusselement 34' ausgebildet, in dem ein mit einem Rastelement 42 verbundener Längsschieber 44 angeordnet ist, bei dessen Verschiebung das Rastelement 42 in eine Rastaussparung 43 an dem konischen oder teilkugelförmigen Ende des Unterstützungsträgers 8 eingreift oder diese freigibt.

Das Rastelement 42 und der Längsschieber 44 stellen dabei Teile eines Gelenkmechanismus 45 dar, welcher weiters einen diese beiden Elemente des Gelenkmechanismus 45 verbindenden Hebel 46 aufweist, der bei einer Längsverschiebung des Längsschiebers 44 schräg zwischen dem Längsschieber 44 und dem hierzu im Wesentlichen senkrecht angeordneten Rastelement 42 verschwenkt wird und dabei das Rastelement 42 in seiner Einbaulage radial zu dem Verschlusselement 34' verschiebt.

Das Rastelement 42 ist in der Art eines Querschiebers mit einer den Durchtritt eines Fortsatzes 48 des Unterstützungsträgers 8 erlaubenden Bohrung 49 ausgebildet und in seiner Einbaulage derart verschiebbar, dass es mit der Bohrung eines Aufnahmeraums 50, welcher sich an den Aufnahmekegel 33' anschließt und zur Aufnahme des Fortsatzes 48 des Unterstützungsträgers 8 in Verriegelungsposition vorgesehen ist, fluchtet oder dass es den Querschnitt der Bohrung verengt.

In einer entriegelnden Stellung ist der Längsschieber 44 durch die gegen einen Absatz 44A desselben entgegen der Kraft einer Feder 47 drückende Hülse 27 in eine dem Unterstützungsträger 8 abgewandte Endposition bzw. Ruheposition verschoben, in der die Bohrung 49 des Rastelements 42 mit der Bohrung des Aufnahmeraums 50 im Wesentlichen fluchtet und der Fortsatz 48 des Unterstützungsträgers 8 ungehindert in den Aufnahmeraum 50 eingeführt werden kann.

Zur Überführung des Gelenkmechanismus 45 aus dieser Ruheposition in eine Verriegelungsposition, in der eine feste Verbindung zwischen dem seitlichen Holm 5 und dem hinteren Dachteil 9' über den Unterstützungsträger 8 hergestellt ist, wird die Hülse 27 oder ein anderes zur Sicherung des Längsschiebers in der Ruheposition vorgesehenes Element in eine die Feder 47, welche auf den Gelenkmechanismus 45 wirkt, freigebende Position verfahren, was im vorliegenden Fall eine Verschiebung der Hülse 27 in Richtung des Unterstützungsträgers 8 bedeutet. Die dabei entlastete, zuvor unter Vorspannung stehende Feder 49 drückt den Längsschieber 44 in Richtung des Unterstützungsträgers 8. Dabei wird über den Hebel 46 das Rastelement 42 aus seiner Ruheposition, in der seine Bohrung 49 mit der Aufnahmebohrung 50 für den Fortsatz 48 des Unterstützungsträgers 8 fluchtet, in eine den Querschnitt des Aufnahmeraums bzw. der Aufnahmebohrung 50 verengende Position verschoben.

Wenn der axiale Fortsatz 48 des Unterstützungsträgers 8 mit einer Rastaussparung wie vorliegend einer Ringnut 43 ausgebildet ist und in den Aufnahmeraum 50 eingeführt ist, greift das Rastelement 42 in die Rastaussparung bzw. Ringnut 43 an dem axialen Fortsatz 48 des Unterstützungsträgers 8 ein und verriegelt somit den Unterstützungsträger 8 in dem Verschlusselement 34'. Ein solcher Zustand ist prinzipmäßig in Fig. 9 dargestellt.

Die Hülse 27 ist an dem Verschlusselement 34 bzw. 34' entlang einer in Fig. 9 exemplarisch skizzierten Nut 51 geführt, welche ein der Zahnleiste 18 des Unterstützungsträgers 8 entsprechendes Zahnprofil aufweist und mit der Zahnleiste 18 des Unterstützungsträgers 8 fluchtet, so dass die Hülse 27 sowohl über die Nut 51 des Verschlusselements 34 bzw. 34' als auch die Zahnleiste 18 des Unterstützungsträgers 8 führbar ist.

In einer alternativen Ausführung kann es selbstverständlich auch vorgesehen sein, dass die Hülse eine entsprechende Nut aufweist, mit der diese entlang einer Führungsschiene an dem Unterstützungsträger und dem Verschlusselement entlang geführt ist. In beiden Fällen bietet die Nutenführung den Vorteil eines Verdrehschutzes.

Bei der gezeigten Ausführung ist spiegelbildlich zu der skizzierten Nut 51 eine weitere, identisch ausgebildete Nut an dem Unterstützungsträger 8 und an dem Verschlusselement 34 bzw. 34' ausgebildet, womit die beiden seitlichen Unterstützungsträger 8 und die Verschlusselemente 34 bzw. 34' sogenannte Gleichteile darstellen, welche auf jeder Fahrzeugseite eingesetzt werden können. Durch die Ausgestaltung dieser Bauelemente als Gleichteile können die Kosten für das Dach 2 bzw. 2' deutlich reduziert werden.

Zum automatisierten Öffnen und Schließen des Dachs 2' werden die den Unterstützungsträgern 8 zugeordneten Hülsen 27 und das hiermit verbundene Dachteil 7' motorisch bewegt. Hierfür ist ein in Fig. 4 schematisch angedeuteter Stellmotor 52 an dem beweglichen Dachteil 7' angeordnet, welcher schnurlos über Funk oder Ultraschall zum Öffnen oder Schließen des Dachs 2' ansteuerbar ist und einen Akkumulator 53 aufweist, welcher bei Anlage des Dachteils 7 an dem Windschutzscheibenrahmen 3 aufgeladen wird.

Bei einer Ausführungsalternative des Stellmotors 52 kann von dem Antriebsmotor 19 eine an den Unterstützungsträgern 8 in Laufrichtung der Hülse 27 angeordnete Leiterbahn 54, welche beispielsweise eine Kupferschiene darstellt, mit Strom beaufschlagt werden, der an der Hülse 27 durch ein als Schleifkontakt ausgebildetes Kontaktelement 55 abgegriffen wird und zu dem Stellmotor 52 im Dachteil 7' geleitet wird. Die Verbindung zur Masse kann dabei auf der jeweils anderen Fahrzeugseite hergestellt werden. Bei letzter Ausführung kann die Laufrichtung des Stellmotors 52 durch Wechseln der Polarität mittels eines Relais geändert werden.

Die mechanische Verbindung zwischen dem Stellmotor 52 und dem jeweils die Hülse 27 durchgreifenden Ritzel 28 kann auf bekannte Weise durch eine gebogene Welle hergestellt sein.

Die hier bezüglich der Ausführung des Kraftfahrzeuges 1' als Cabriolet beschriebenen Ausführungen können bei Bedarf und entsprechender Adaption selbstverständlich ebenfalls bei der Ausführung des Kraftfahrzeuges 1 als Targa-Fahrzeug Anwendung finden.

### Bezugszeichen

- 1, 1': Kraftfahrzeug
- 2, 2': Dach
- 2A: Dachöffnung
- 3: Windschutzscheibenrahmen
- 4: Windschutzscheibe
- 5: seitlicher Holm
- 6: Querrahmenteil
- 7, 7': mittleres, bewegliches Dachteil
- 8, 8': Unterstützungsträger
- 9, 9': hinteres Dachteil
- 10: Heckscheibe
- 11: Verriegelungseinrichtung
- 12: Aufnahmekanal
- 13: erste Rollenlagerung
- 14: zweite Rollenlagerung
- 15: Halteeinrichtung
- 16: Rollen
- 17: Antriebseinrichtung
- 18: Zahnleiste
- 19: Antriebsmotor
- 20: Ritzel
- 21: Rollen
- 22: Absatz
- 23: hülsenartiges Gehäuseteil
- 24: Welle
- 25: Schraubverbindung
- 26: elastische Verbindung, Federstahlblech
- 27: Hülse
- 28: Ritzel
- 29: Rahmenteil
- 30: Aufsteller
- 31: fahrzeugheckseitiges Ende des Unterstützungs- trägers
- 32: Schwenkachse
- 33, 33': zentrierende Aufnahme, Aufnahmekegel
- 34,34': Verschlusselement
- 35: Verriegelungshebel
- 35A: erstes Ende des Verriegelungshebels
- 35B: zweites Ende des Verriegelungshebels
- 36: Aussparung
- 37: Endfortsatz
- 38: Haken
- 39: Feder
- 40: Arretierungseinrichtung
- 41: Hebelelement
- 41A: erstes Hebelende
- 41B: zweites Hebelende
- 42: Rastelement
- 43: Ringnut
- 44: Längsschieber
- 44A: Absatz
- 45: Gelenkmechanismus
- 46: Hebel
- 47: Feder
- 48: Fortsatz
- 49: Bohrung
- 50: Aufnahmeraum
- 51: Nut
- 52: Stellmotor
- 53: Akkumulator
- 54: Stromführung
- 55: Kontaktelement

## Patentansprüche

1. Kraftfahrzeug mit wenigstens einem beweglichen Dachteil (7, 7'), das im geschlossenen Zustand fahrzeugfrontseitig an einen Windschutzscheibenrahmen (3) und mit seitlichen Außenbereichen jeweils an einen Unterstützungsträger (8) anschließt, wobei die Unterstützungsträger (8) zur Ausbildung eines offenen Dachbereichs (2A) zumindest bereichsweise in seitliche Holme (5) des Windschutzscheibenrahmens (3) verlagerbar sind,
**dadurch gekennzeichnet, dass** die Unterstützungsträger (8) in einem durch den zugeordneten seitlichen Holm (5) des Windschutzscheibenrahmens (3) gebildeten Aufnahmekanal (12) im Bereich ihres fahrzeugfrontseitigen Endes und im Bereich ihres Austritts aus dem oberen Ende des seitlichen Holms (5) jeweils mittels einer Rollenlagerung (13, 14) spielfrei und mit definiertem Abstand zur Wandung des Aufnahmekanals (12) geführt sind.

2. Kraftfahrzeug nach Anspruch 1,
**dadurch gekennzeichnet, dass** der Unterstützungsträger (8) an seinem fahrzeugfrontseitigen Ende zur Ausbildung der fahrzeugfrontseitigen Rollenlagerung (13) eine wenigstens annähernd sternförmige Halteeinrichtung (15) aufweist, an der vorzugsweise drei koplanar gelagerte Rollen (16) gehaltert sind.

3. Kraftfahrzeug nach Anspruch 1 oder 2,
**dadurch gekennzeichnet,**
**dass** die dem Austrittsbereich des Unterstützungsträgers aus dem seitlichen Holm zugeordnete Rollenlagerung (14) im Bereich einer Antriebseinrichtung (17) für den Unterstützungsträger (8) angeordnet ist.

4. Kraftfahrzeug nach Anspruch 3,
**dadurch gekennzeichnet, dass** die Antriebseinrichtung (17) eine in Längsrichtung des Unterstützungsträgers (8) an diesem ausgebildete Zahnleiste (18) und ein damit in Eingriff stehendes, von einem Antriebsmotor (19) antreibbares Ritzel (20) umfasst.

5. Kraftfahrzeug nach Anspruch 4,
**dadurch gekennzeichnet, dass** der Unterstützungsträger (8) im Bereich seines Austritts aus dem seitlichen Holm (5) durch wenigstens zwei Rollen (21) der dem Austrittsbereich zugeordneten Rollenlagerung (14) und das Ritzel (20) der. Antriebseinrichtung (17) geführt ist.

6. Kraftfahrzeug nach Anspruch 4 oder 5,
**dadurch gekennzeichnet, dass** die dem Austrittsbereich zugeordnete Rollenlagerung (14) und das Ritzel (20) der Antriebseinrichtung (17) in einem einen Anschlag (22) für den Unterstützungsträger (8) bildenden, hülsenartigen Gehäuseteil (23) angeordnet sind.

7. Kraftfahrzeug nach Anspruch 6,
**dadurch gekennzeichnet, dass** das hülsenartige Gehäuseteil (23) ein separates, an dem jeweiligen seitlichen Holm (5) des Windschutzscheibenrahmens (3) befestigbares Bauteil darstellt.

8. Kraftfahrzeug nach einem der Ansprüche 1 bis 7,
**dadurch gekennzeichnet, dass** der Unterstützungsträger (8) an seinem fahrzeugheckseitigen Ende (31) zur zentrierten Aufnahme an einer Verriegelungseinrichtung (11) an einem hinteren Dachteil vorgesehen ist, wobei die Verriegelungseinrichtung (11) mit einem eine zentrierende Aufnahme (33) aufweisenden, zylindrischen Verschlusselement (34) ausgebildet ist, in dem ein wippenartig gelagerter Verriegelungshebel angeordnet ist, welcher zum Eingreifen in eine Aussparung (36) an dem fahrzeugheckseitigen Ende des Unterstützungsträgers (8) in einer Verriegelungsposition ausgelegt ist.

9. Kraftfahrzeug nach Anspruch 8,
**dadurch gekennzeichnet, dass** der Verriegelungshebel (35) bei Einführen des fahrzeugheckseitigen Endes (31) des Unterstützungsträgers (8) in die zentrierende Aufnahme (33) des Verschlusselements (34) aus einer Ruheposition in die Verriegelungsposition überführt wird.

10. Kraftfahrzeug nach Anspruch 9,
**dadurch gekennzeichnet, dass** der Verriegelungshebel (35) an seinem dem Unterstützungsträger (8) zugewandten Ende (35A) mit einer Feder (39) zusammenwirkt und an seinem dem Unterstützungsträger (8) abgewandten Ende (35B) mit einer auf dem Verschlusselement (34) geführten, mit dem hinteren Dachteil (9') drehbar verbundenen Hülse (27) zusammenwirkt, wobei die Hülse (27) bei Einführung des fahrzeugheckseitigen Endes (31) des Unterstützungsträgers (8) in die zentrierende Aufnahme (33) des Verschlusselements (34) bezüglich ihrer Längsbewegung freigegeben wird und damit den Verriegelungshebel (35) freigibt, welcher durch die Kraft der Feder (39) in die Aussparung (36) an dem fahrzeugheckseitigen Ende (31) des Unterstützungsträgers (8) gedrückt wird.

11. Kraftfahrzeug nach Anspruch 10,
**dadurch gekennzeichnet, dass** die Hülse (29) im nichtverriegelnden Zustand der Verriegelungseinrichtung (11) durch eine Arretierungseinrichtung (40) axial gehalten ist, welche mit einem Federelement (42) zusammenwirkt und bei Aufnahme des Endes (31) des Unterstützungsträgers (8) in eine die axiale Bewegung der Hülse freigebende Stellung bewegt wird.

12. Kraftfahrzeug nach Anspruch 11,
**dadurch gekennzeichnet, dass** die Arretierungseinrichtung (40) mit einem Hebelelement (41) ausgebildet ist, welches im nichtverriegelnden Zustand der Verriegelungseinrichtung (11) mit einem ersten Hebelende (41A) in die zentrierende Aufnahme (33) des Verschlusselements (34) ragt und mit einem zweiten Hebelende (41B) durch die Kraft des Federelements (42) in eine über den Außenumfang des Verschlusselements (34) ragende, die Hülse (27) axial haltende Position verschoben ist, und welches im verriegelnden Zustand der Verriegelungseinrichtung (11) durch eine von dem fahrzeugheckseitigen Ende (31) des Unterstützungsträgers (8) auf das erste Hebelende (41A) ausgeübte Kraft entgegen der Kraft des Federelements (42) derart verschwenkt ist, dass das zweite Hebelende (41B) innerhalb des Außenumfangs des Verschlusselements (34) liegt.

13. Kraftfahrzeug nach einem der Ansprüche 1 bis 7,
**dadurch gekennzeichnet, dass** der Unterstützungsträger (8) an seinem fahrzeugheckseitigen Ende (31) zur zentrierten Aufnahme an einer Verriegelungseinrichtung (11') an einem hinteren Dachteil (9') vorgesehen ist, wobei die Verriegelungseinrichtung (11') mit einem eine zentrierende Aufnahme (33') aufweisenden, zylindrischen Verschlusselement (34') ausgebildet ist, in dem ein mit einem Rastelement (42) verbundener Längsschieber (44) angeordnet ist, bei dessen Verschiebung das Rastelement (42) in eine Rastaussparung (43) an dem fahrzeugheckseitigen Ende (31) des Unterstützungsträgers (8) eingreift oder diese freigibt.

14. Kraftfahrzeug nach Anspruch 13,
**dadurch gekennzeichnet, dass** das Rastelement (42) bei Einführen des fahrzeugheckseitigen Endes (31) des Unterstützungsträgers in das Verschlusselement (34') und Verschiebung des Längsschieber (44) über einen Gelenkmechanismus (45) aus einer Ruheposition in die Verriegelungsposition überführt wird, indem eine an einem Angriffspunkt des Gelenkmechanismus (45) angreifende Feder (47) freigegeben wird und das Rastelement (42) in die Rastaussparung (43) an dem fahrzeugheckseitigen Ende (31) des Unterstützungsträgers (8) drückt.

15. Kraftfahrzeug nach Anspruch 14,
**dadurch gekennzeichnet, dass** der Angriffspunkt der Feder (47) an dem Längsschieber (44) ausgebildet ist, welcher in nichtverriegelndem Zustand von einer auf dem Verschlusselement (34') geführten, mit dem hinteren Dachteil (9') drehbar verbundenen Hülse (27) entgegen der Kraft der Feder (47) gehalten ist, wobei die Hülse (27) nach Einführung des fahrzeugheckseitigen Endes (31) des Unterstützungsträgers (8) in die zentrierende Aufnahme (33') in Richtung des Unterstützungsträgers (8) bewegt wird und damit den Längsschieber (44) des Gelenkmechanismus (45) freigibt, welcher durch die Kraft der Feder (47) über einen Hebel (46) das Rastelement (42) in die Rastaussparung (43) an dem Unterstützungsträger (8) drückt.

16. Kraftfahrzeug nach einem der Ansprüche 13 bis 15,
**dadurch gekennzeichnet, dass** die Rastaussparung als eine Ringnut (43) an einem axialen Fortsatz (8) im Bereich des fahrzeugheckseitigen Endes (31) des Unterstützungsträgers (8) ausgebildet ist.

17. Kraftfahrzeug nach einem der Ansprüche 10 bis 16,
**dadurch gekennzeichnet, dass** die Hülse (27) an dem Verschlusselement (34, 34') entlang einer Nut (51), welche in Längsrichtung des Verschlusselements (34, 34') verläuft, geführt ist.

18. Kraftfahrzeug nach Anspruch 17,
**dadurch gekennzeichnet, dass** die an dem Verschlusselement.(34, 34') ausgebildete Nut (51) mit der Zahnleiste (18) an dem Unterstützungsträger (8) fluchtet, wobei die Hülse (27) über die Nut (51) des Verschlusselements (34, 34') und die Zahnleiste (18) des Unterstützungsträgers (8) führbar ist.

19. Kraftfahrzeug nach einem der Ansprüche 1 bis 18,
**dadurch gekennzeichnet, dass** die den beiden seitlichen Unterstützungsträgern (8) zugeordneten Verschlusselemente (34, 34') mit je zwei spiegelbildlich angeordneten Nuten (51) als Gleichteile ausgebildet sind.

20. Kraftfahrzeug nach einem der Ansprüche 1 bis 19,
**dadurch gekennzeichnet, dass** das fahrzeugheckseitige Ende des Unterstützungsträgers (8) als konus- oder teilkugelförmiger Bereich (31) ausgebildet ist.

21. Kraftfahrzeug nach einem der Ansprüche 1 bis 20,
**dadurch gekennzeichnet, dass** die zentrierende Aufnahme des Verschlusselements (34, 34') als ein Aufnahmekegel (33, 33') ausgebildet ist.

22. Kraftfahrzeug nach einem der Ansprüche 1 bis 21,
**dadurch gekennzeichnet, dass** die Unterstützungsträger (8) als Gleichteile ausgeführt sind.

23. Kraftfahrzeug nach einem der Ansprüche 1 bis 22,
**dadurch gekennzeichnet, dass** der Unterstützungsträger (8) im in den seitlichen Holm (5) eingefahrenen Zustand vorzugsweise durch eine Selbsthemmung der Antriebseinrichtung (17) arretiert ist.

24. Kraftfahrzeug nach einem der Ansprüche 1 bis 23,
**dadurch gekennzeichnet, dass** ein zentraler Antriebsmotor (19) für beide Unterstützungsträger (8) vorgesehen ist, wobei der Antriebsmotor (19) in Fahrzeugquerrichtung mit dem jeweils mit dem Unterstützungsträger (8) zusammenwirkenden Ritzel (20) verbunden ist.

25. Kraftfahrzeug nach einem der Ansprüche 10 bis 24,
**dadurch gekennzeichnet, dass** zum Antrieb der auf den Verschlusselementen (34') geführten Hülsen (27) und des hiermit verbundenen Dachteils (7') ein an dem Dachteil (7') angeordneter Stellmotor (52) vorgesehen ist, welcher über einen Akkumulator (53) mit einer Stromführung (54) an den Unterstützungsträgern (8) verbindbar ist.

26. Kraftfahrzeug nach Anspruch 25,
**dadurch gekennzeichnet, dass** die Stromführung an den Unterstützungsträgern (8) als eine im Bereich des seitlichen Holms (5) des Windschutzscheibenrahmens (3) mit Strom beaufschlagte Leiterbahn (54) und das Kontaktelement (55) als ein Schleifkontakt ausgebildet sind.

27. Kraftfahrzeug nach einem der Ansprüche 10 bis 24,
**dadurch gekennzeichnet, dass** zum Antrieb der auf den Verschlusselementen (34') geführten Hülsen (27) und des hiermit verbundenen Dachteils (7') ein an dem Dachteil (7') angeordneter Stellmotor (52) vorgesehen ist, welcher schnurlos ansteuerbar ist und einen Akkumulator (53) aufweist, welcher vorzugsweise bei Anlage des Dachteils (7') an dem Windschutzscheibenrahmen (3) aufladbar ist.

## Claims

1. Motor vehicle comprising at least one movable roof part (7, 7') which, in the closed state, abuts on a windshield frame (3) at the vehicle front and whose lateral outer areas each abut on a respective support (8), said supports (8) being shiftable at least in some areas into lateral columns (5) of the windshield frame (3) so as to form an open roof area (2A),
**characterized in that**
the supports (8) are guided, at their vehicle-front ends, within an accomodating channel (12) formed by the assigned lateral column (5) of the windshield frame (3), and are also guided, in the area where they exit from the upper end of the lateral column (5), by a respective roller bearing (13, 14) without play and at a defined distance from the wall of the accomodating channel (12).

2. Motor vehicle according to claim 1, **characterized in that** the support (8) comprises, at its vehicle-front end, an at least approximately star-shaped holding device (15) on which preferably three coplanarly supported rollers (16) are held so as to form the vehicle-front roller bearing (13).

3. Motor vehicle according to claim 1 or 2, **characterized in that** the roller bearing (14) assigned to the area where the support exits from the lateral column is arranged in the area of a drive means (17) for the support (8).

4. Motor vehicle according to claim 3, **characterized in that** the drive means (17) comprises a notched strip (18), formed on the support (8) in a longitudinal direction of the latter, and a pinion (20) which engages said notched strip (18) and can be driven by a drive motor (19).

5. Motor vehicle according to claim 4, **characterized in that** the support (8) is guided, in the area where it exits from the lateral column (5), by at least two rollers (21) of the roller bearing (14) assigned to said exiting area and by the pinion (20) of the drive means (17).

6. Motor vehicle according to claim 4 or 5, **characterized in that** the roller bearing (14) assigned to the exiting area and the pinion (20) of the drive means (17) are arranged in a sleeve-like housing component (23) which forms a stop (22) for the support (8).

7. Motor vehicle according to claim 6, **characterized in that** the sleeve-like housing component (23) constitutes a separate component which can be mounted to the respective lateral column (5) of the windshield frame (3).

8. Motor vehicle according to any one of claims 1 to 7, **characterized in that** the vehicle-rear end (31) of the support (8) is provided for being centrally accommodated by a locking device (11) at a rear roof part, said locking device (11) being provided with a cylindrical fastening element (34), which comprises a centering recess (33) and in which a rocker-mounted locking lever is arranged that is designed to engage in a recess (36) at the vehicle-rear end of the support (8) in a locking position.

9. Motor vehicle according to claim 8, **characterized in that** the locking lever (35) is guided from a rest position into the locking position during the introduction of the vehicle-rear end (31) of the support (8) into the centering recess (33) of the fastening element (34).

10. Motor vehicle according to claim 9, **characterized in that** the locking lever (35) cooperates with a spring (39) at the end (35A) turned towards the support (8) and also cooperates, at its end (35B) turned away from the support (8), with a sleeve (27) that is guided on the fastening element (34) and is rotatably connected with the rear roof part (9'), said sleeve (27) being disengaged, by introduction of the vehicle-rear end (31) of the support (8) into the centering recess (33) of the fastening element (34), to enable the longitudinal movement of the sleeve (27) which thus disengages the locking lever (35) that is urged into the recess (36) at the vehicle-rear end (31) of the support (8) by the force of the spring (39).

11. Motor vehicle according to claim 10, **characterized in that**, when the locking device (11) is not in the locking state, the sleeve (29) is axially held by an arresting device (40), which cooperates with a spring element (42) and which, when accommodating the end (31) of the support (8), is moved into a position enabling the sleeve's axial movement.

12. Motor vehicle according to claim 11, **characterized in that** the arresting device (40) is provided with a lever element (41) such that, when the locking device (11) is not in the locking state, a first lever end (41A) protrudes into the centering recess (33) of the fastening element (34) and a second lever end (41 B) is moved by the force of the spring element (42) into a position protruding beyond the outer circumference of the fastening element (34) and holding the sleeve (27) axially, and when the locking device (11) is in the locking state, the lever element (41) is pivoted by a force exerted by the vehicle-rear end (31) of the support (8) upon the first lever end (41A) against the force of the spring element (42) such that the second lever end (41 B) lies within the outer circumference of the fastening element (34).

13. Motor vehicle according to any one of claims 1 to 7, **characterized in that** the support (8) is provided, at its vehicle-rear end (31) for being centrally accommodated in a locking device (11') at a rear roof part (9'), said locking device (11') being provided with a cylindrical fastening element (34'), which comprises a centering recess (33') and in which a longitudinal slide (44), connected to a snap-fit element (42), is arranged whose displacement causes the snap-fit element (42) to engage or disengage a snap-fit recess (43) at the vehicle-rear end (31) of the support (8).

14. Motor vehicle according to claim 13, **characterized in that** introducing the vehicle-rear end (31) of the support into the fastening element (34') and displacing the longitudinal slide (44) causes the snap-fit element (42) to be guided from a rest position to the locking position via an articulated mechanism (45) **in that** a spring (47) acting upon a point of action of the articulated mechanism (45) is disengaged and urges the snap-fit element (42) into the snap-fit recess (43) at the vehicle-rear end (31) of the support (8).

15. Motor vehicle according to claim 14, **characterized in that** the point of action of the spring (47) is provided on the longitudinal slide (44) which, when in the non-locking state, is held against the force of the spring (47) by a sleeve (27), which is guided on the fastening element (34') and is rotatably connected to the rear roof part (9'), said sleeve (27) being moved in the direction of the support (8), after introduction of the vehicle-rear end (31) of the support (8) into the centering recess (33'), and thus disengaging the longitudinal slide (44) of the articulated mechanism (45), which urges the snap-fit element (42) into the snap-fit recess (43) on the support (8) by the force of the spring (47) via a lever (46).

16. Motor vehicle according to any one of claims 13 to 15, **characterized in that** the snap-fit recess is provided as a ring groove (43) on an axial extension (8) in the area of the vehicle-rear end (31) of the support (8).

17. Motor vehicle according to any one of claims 10 to 16, **characterized in that** the sleeve (27) is guided on the fastening element (34, 34') along a groove (51) that extends in the longitudinal direction of the fastening element (34, 34').

18. Motor vehicle according to claim 17, **characterized in that** the groove (51) formed in the fastening element (34, 34') is aligned with the notched strip (18) on the support (8), and the sleeve (27) can be guided via the groove (51) of the fastening element (34, 34') and the notched strip (18) of the support (8).

19. Motor vehicle according to any one of claims 1 to 18, **characterized in that** the fastening elements (34, 34') assigned to both lateral supports (8), are provided as identical parts with two grooves (51) each disposed in mirror image.

20. Motor vehicle according to any one of claims 1 to 19, **characterized in that** the vehicle-rear end of the suport (8) is formed as a conical or partially spherical area (31).

21. Motor vehicle according to any one of claims 1 to 20, **characterized in that** the centering recess of the fastening element (34, 34') is formed as an accommodating taper (33, 33').

22. Motor vehicle according to any one of claims 1 to 21, **characterized in that** the supports (8) are designed as identical parts.

23. Motor vehicle according to any one of claims 1 to 22, **characterized in that** the support (8), when retracted into the lateral column (5), is preferably arrested by self-locking of the drive means (17).

24. Motor vehicle according to any one of claims 1 to 23, **characterized in that** a central drive motor (19) is provided for both supports (8), and the drive motor (19) is connected with the pinion (20), respectively cooperating with the support (8), in the transverse vehicle direction.

25. Motor vehicle according to any one of claims 10 to 24, **characterized in that** a servomotor (52), which is arranged at the roof part (7') and can be connected to a power supply (54) on the supports (8) via an accumulator (53), is provided to drive the sleeves (27), which are guided on the fastening elements (34'), and the roof part (7') connected with them.

26. Motor vehicle according to claim 25, **characterized in that** the power supply on the supports (8) is provided as a conductor line (54) to which a current is applied in the area of the lateral column (5) of the windshield frame (3) and the contact element (55) is provided as a sliding contact.

27. Motor vehicle according to any one of claims 10 to 24, **characterized in that** a servomotor (52), which is arranged at the roof portion (7'), can be controlled in a cordless manner and comprises an accumulator (53) that is preferably chargeable by the roof part (7') contacting the windshield frame (3), is provided to drive the sleeves (27), which are guided on the fastening elements (34'), and the roof part (7') connected with them.

## Revendications

1. Véhicule automobile comprenant au moins un élément de toit mobile (7, 7') dont la partie située à l'avant du véhicule avoisine, à l'état fermé, un cadre de pare-brise (3) et dont les régions latérales extérieures avoisinent chacune un support (8) respectif, lesdits supports (8) pouvant être déplacés au moins partiellement dans des montants latéraux (5) du cadre de pare-brise (3) pour former une région de toit ouverte (2A),
**caractérisé en ce que**
les supports (8) sont guidées, dans la région de leurs extrémités situées vers l'avant du véhicule, dans un canal de logement (12) constitué par le montant latéral (5) associé du cadre de pare-brise (3), et sont guidés, dans la région où ils sortent de l'extrémité supérieure du montant latéral (5), par un roulement à rouleaux (13, 14) sans jeu et à une distance définie du paroi du canal de logement (12).

2. Véhicule automobile selon la revendication 1, **caractérisé en ce que**, pour former le roulement à rouleaux (13) située vers l'avant du véhicule, le support (8) présente, à son extrémité située vers l'avant du véhicule, un dispositif de support (15) au moins approximativement en forme d'étoile sur lequel sont supportés de préférence trois rouleaux (16) montés de manière coplanaire.

3. Véhicule automobile selon la revendication 1 ou 2, **caractérisé en ce que** le roulement à rouleaux (14) associé à la région où le support sort du montant latéral est disposé dans la région d'un moyen d'entraînement (17) pour le support (8).

4. Véhicule automobile selon la revendication 3, **caractérisé en ce que** le moyen d'entraînement (17) comprend une bande crantée (18), formée sur le support (8) et en direction longitudinale du support (8), et un pignon (20) qui vient en prise avec ladite bande crantée (18) et peut être entraîné par un moteur d'entraînement (19).

5. Véhicule automobile selon la revendication 4, **caractérisé en ce que** le support (8) est guidé, dans la région où il sort du montant latéral (5), par au moins deux rouleaux (21) du roulement à rouleaux (14) associé à ladite région de sortie et par le pignon (20) du moyen d'entraînement (17).

6. Véhicule automobile selon la revendication 4 ou 5, **caractérisé en ce que** le roulement à rouleaux (14) associé à ladite région de sortie et le pignon (20) du moyen d'entraînement (17) sont disposés dans un élément de boîtier (23) en forme de douille qui constitue une butée (22) pour le support (8).

7. Véhicule automobile selon la revendication 6, **caractérisé en ce que** l'élément de boîtier (23) en forme de douille constitue un composant séparé qui peut être fixé au montant latéral (5) respectif du cadre de pare-brise (3).

8. Véhicule automobile selon l'une quelconque des revendications 1 à 7, **caractérisé en ce que** l'extrémité (31) du support (8) située vers l'arrière du véhicule est destinée pour le logement central dans un dispositif de verrouillage (11) disposé sur un élément de toit arrière, ledit dispositif de verrouillage (11) étant réalisé avec un élément de fermeture (34) cylindrique, qui présente un logement centrant (33) et dans lequel est disposé un levier de verrouillage basculant, ledit levier étant destiné à venir en prise, dans une position de verrouillage, avec un évidement (36) à l'extrémité du support (8) située vers l'arrière du véhicule.

9. Véhicule automobile selon la revendication 8, **caractérisé en ce que** le levier de verrouillage (35) est guidé d'une position de repos vers la position de verrouillage lors de l'introduction de l'extrémité (31) du support (8) située vers l'arrière du véhicule dans le logement centrant (33) de l'élément de fermeture (34).

10. Véhicule automobile selon la revendication 9, **caractérisé en ce que** l'extrémite (35A) du levier de verrouillage (35) tournée vers le support (8) coopère avec un ressort (39) et que son extrémité (35B) détournée du support (8) coopère avec une douille (27) qui est guidée sur l'élément de fermeture (34) et est reliée de manière rotative à l'élément de toit arrière (9'), ladite douille (27) étant déverrouillée par rapport à son mouvement longitudinal, lorsque l'extrémité (31) du support (8) située vers l'arrière du véhicule est introduite dans le logement centrant (33) de l'élément de fermeture (34), et ainsi libère le levier de verrouillage (35) qui est poussé par l'effort du ressort (39) dans l'évidement (36) à l'extrémité (31) du support (8) située vers l'arrière du véhicule.

11. Véhicule automobile selon la revendication 10, **caractérisé en ce que**, à l'état non pas verrouillant du dispositif de verrouillage (11), la douille (29) est tenue axialement par un dispositif d'arrêt (40) qui coopère avec un élément élastique (42) et qui, lors du logement de l'extrémité (31) du support (8), est déplacé vers une position permettant le mouvement axial de la douille.

12. Véhicule automobile selon la revendication 11, **caractérisé en ce que** le dispositif d'arrêt (40) présente un élément levier (41) de sorte qu'à l'état non pas verrouillant du dispositif de verrouillage (11), une première extrémité de levier (41A) fasse saillie dans le logement centrant (33) de l'élément de fermeture (34) et une deuxième extrémité de levier (41 B) soit déplacée par l'effort de l'élément élastique (42) vers une position faisant saillie en dehors de la périphérie extérieure de l'élément de fermeture (34) et retenant la douille (27) axialement, et qu'à l'état verrouillant du dispositif de verrouillage (11), ledit élément levier (41) soit pivoté par un effort que l'extrémité (31) du support (8) située vers l'arrière du véhicule exerce sur la première extrémité de levier (41A) à l'encontre de l'effort de l'élément élastique (42) de sorte que la deuxième extrémité de levier (41 B) soit disposée à l'intérieur de la périphérie extérieure de l'élément de fermeture (34).

13. Véhicule automobile selon l'une quelconque des revendications 1 à 7, **caractérisé en ce que** l'extrémité (31) du support (8) située vers l'arrière du véhicule est destinée pour le logement central dans un dispositif de verrouillage (11') disposé à un élément de toit arrière (9'), ledit dispositif de verrouillage (11') présentant un élément cylindrique de fermeture (34'), qui comprend un logement centrant (33') et dans lequel est disposé, relié à un élément d'encliquetage (42), un poussoir longitudinal (44) dont le déplacement fait l'élément d'encliquetage (42) venir en prise ou hors de prise avec un évidement d'encliquetage (43) à l'extrémité (31) du support (8) située vers l'arrière du véhicle.

14. Véhicule automobile selon la revendication 13, **caractérisé en ce que**, lors de l'introduction de l'extrémité (31) du support située vers l'arrière du véhicule dans l'élément de fermeture (34') et du déplacement du poussoir longitudinal (44), l'élément d'encliquetage (42) est amené d'une position de repos à une position de verrouillage au moyen d'un mécanisme articulé (45), en déverrouillant un ressort (47) qui agit sur un point d'attaque du mécanisme articulé (45) et qui pousse l'élément d'encliquetage (42) dans l'évidement d'encliquetage (43) à l'extrémité (31) du support (8) située vers l'arrière du véhicule.

15. Véhicule automobile selon la revendication 14, **caractérisé en ce que** le point d'attaque du ressort (47) est réalisé sur le poussoir longitudinal (44) qui, à l'état non pas verrouillant, est tenu à l'encontre de l'effort du ressort (47) par une douille (27), qui est guidée sur l'élément de fermeture (34') et est reliée de manière rotative à l'élément de toit arrière (9'), ladite douille (27) étant déplacée, après introduction de l'extrémite (31) du support (8) située vers l'arrière du véhicule dans le logement centrant (33'), en direction du support (8) et déverrouillant ainsi le poussoir longitudinal (44) du mécanisme articulé (45), qui pousse l'élément d'encliquetage (42) dans l'évidement d'encliquetage (43) sur le support (8) au moyen d'un levier (46) par l'effort du ressort (47).

16. Véhicule automobile selon l'une quelconque des revendications 13 à 15, **caractérisé en ce que** l'évidement d'encliquetage présente la forme d'une rainure annulaire (43) sur une extension axiale (8) dans la région de l'extrémité (31) du support (8) située vers l'arrière du véhicule.

17. Véhicule automobile selon l'une quelconque des revendications 10 à 16, **caractérisé en ce que** la douille (27) est guidée sur l'élément de fermeture (34, 34') le long d'une rainure (51) qui s'étend dans une direction longitudinale de l'élément de fermeture (34, 34').

18. Véhicule automobile selon la revendication 17, **caractérisé en ce que** la rainure (51) réalisée dans l'élément de fermeture (34, 34') est alignée avec la bande crantée (18) sur le support (8), et la douille (27) peut être guidée au moyen de la rainure (51) de l'élément de fermeture (34, 34') et au moyen de la bande crantée (18) du support (8).

19. Véhicule automobile selon l'une quelconque des revendications 1 à 18, **caractérisé en ce que** les éléments de fermeture (34, 34') associés aux deux supports latéraux (8) sont réalisés commes des pièces identiques, dont chacune présente deux rainures (51) disposées en miroir.

20. Véhicule automobile selon l'une quelconque des revendications 1 à 19, **caractérisé en ce que** l'extrémité du support (8) située vers l'arrière du véhicule présente la forme d'une région conique ou partiellement sphérique (31).

21. Véhicule automobile selon l'une quelconque des revendications 1 à 20, **caractérisé en ce que** le logement centrant de l'élément de fermeture (34, 34') présente la forme d'un logement conique (33, 33').

22. Véhicule automobile selon l'une quelconque des revendications 1 à 21, **caractérisé en ce que** les supports (8) sont réalisés comme des pièces identiques.

23. Véhicule automobile selon l'une quelconque des revendications 1 à 22, **caractérisé en ce que** le support (8), à l'état retiré dans le montant latéral (5), est de préférence arrêté par auto-verrouillage du moyen d'entraînement (17).

24. Véhicule automobile selon l'une quelconque des revendications 1 à 23, **caractérisé en ce que** l'on prévoit un moteur central d'entraînement (19) pour tous les deux supports (8), et **en ce que** le moteur d'entraînement (19) est raccordé, en direction transversale du véhicule, au pignon (20) qui coopère respectivement avec le support (8).

25. Véhicule automobile selon l'une quelconque des revendications 10 à 24, **caractérisé en ce que** l'on prévoit pour l'entraînement des douilles (27) guidées sur les éléments de fermeture (34') et de l'élément de toit (7') relié à celles-ci, un servomoteur (52), qui est disposé sur l'élément de toit (7') et qui peut être relié à une alimentation en courant (54) sur les supports (8) au moyen d'un accumulateur (53).

26. Véhicule automobile selon la revendication 25, **caractérisé en ce que** l'alimentation en courant sur les supports (8) présente la forme d'une ligne condutrice (54) qui est soumise à un courant dans la région du montant latéral (5) du cadre de pare-brise (3), et l'élément de contact (55) présente la forme d'un contact glissant.

27. Véhicule automobile selon l'une quelconque des revendications 10 à 24, **caractérisé en ce que** l'on prévoit pour l'entraînement des douilles (27) guidées sur les éléments de fermeture (34') et de l'élément de toit (7') relié à celles-ci, un servomoteur (52), qui est disposé sur l'élément de toit (7') et qui peut être asservi sans fil et comprend un accumulateur (53) pouvant être chargé de préférence lorsque l'élément de toit (7') prend appui contre le cadre de pare-brise (3).
